# EUROPEAN PATENT APPLICATION

(11) **EP 2 890 171 A1**
(43) Date of publication of application: **01.07.2015**
(21) Application number: 13306864.3
(22) Date of filing: 26.12.2013
(51) Int. Cl.: H04W 12/08, G06Q 20/34

(54) **Method for allowing an access control enforcer to access to rules of a secure element with a single specific command, and associated device**

(71) Applicant: Gemalto SA, 92190 Meudon (FR)
(72) Inventor: Quiñones, Eric Lawrence, 92190 Meudon (FR)
(74) Representative: Lotaut, Yacine Diaw

(57) **Abstract**

A method allows an access control enforcer (ACE) of a user wireless communication equipment (CE), comprising an application (HA), to access to rules stored into an Access Rule Application Master applet (ARA-M) and at least one Access Rule Application Client applet (ARA-C1) of a secure element (SE) in a Global Platform Device Secure Element environment. This method comprises a step (i) during which the access control enforcer (ACE) transmits, to the secure element (SE), a specific command comprising one data object, named REF-DO and representing a rule REF-AR-DO to be retrieved for an application requesting access to the secure element (SE), and a step (ii) during which the Access Rule Application Master applet (ARA-M) determines each REF-AR-DO represented by a received REF-DO in storing means it comprises and in each Access Rule Application Client applet (ARA-C1), and then transmits each determined REF-AR-DO in a response message.

## Description

### Technical field

The present invention relates to Global Platform Device Secure Element, and more precisely to the optimization of the access of access control enforcers of user wireless communication equipments to access control rules stored into secure elements and intended for defining control access of users to applications of these secure elements.

A secure element may be a SIM (or UICC) card or a smart card or a chip card or else an integrated circuit card, for instance.

### Background of the invention

As known by the man skilled in the art, the Global Platform Device Secure Element Access Control specification defines access control rules. One means here by "access control rule" a mapping between a handset application (running into a wireless communication equipment) and a secure element application and what kind of restricted access that are defined.

These rules are stored into applets of a secure element, called ARA-M ("Access Rule Application Master") and possibly one or more ARA-Cs ("Access Rule Application Client"). Moreover these rules are generally provided to a secure element by at least one server, possibly over the air.

An access control rule stored in an ARA (ARA-M or ARA-C) is defined by a "REF-AR-DO", which is composed of two small data objects "REF-DO" and "AR-DO". A REF-DO is a data object that maps a secure element application (represented by an "AID-REF-DO") and a handset application (represented by a "HASH-REF-DO"). An AR-DO is a data object that describes a rule, if it is allowed or not. So, an AR-DO object can be an "APDU-AR-DO" object or a "NFC-AR-DO" object or a combination of both objects.

When an application, running into a wireless communication equipment, wants to access to a secure element application, this access must be authorized by one or more rules stored into this secure element. So, these rules must be known by the access control enforcer of this wireless communication equipment, which is a part of a secure element access application programming interface arranged for exchanging data with the concerned secure element. Once an access control enforcer has retrieved the rule(s) defining the access of a handset application to a secure element application, it has to interpret these rules to decide whether or not it may allow this handset application to access the secure element application.

There are two ways for an access control enforcer to retrieve a rule from the ARA-M applet.

A first way consists in sending a "Get Data-ALL" command to the ARA-M to retrieve all the rules (REF-AR-DO) stored into all ARAs (i.e. ARA-M and ARA-Cs). In response to the last command the ARA-M will send a "Response-ALL-AR-DO" message comprising all the stored REF-AR-DOs. When the number of bytes of all the rules to be retrieved exceeds a maximal value that a single response message may contained, a "Get Data-NEXT" command needs to be issued by the Access Control Enforcer for obtaining the other response message(s).

A second way consists in sending a "Get Data-Specific" command, comprising one specific REF-DO, to the ARA-M, to retrieve the rule (REF-AR-DO) defined by this specific REF-Do and stored into the ARA-M and a ARA-C). In response to the last command the ARA-M will send a "Response-AR-DO" message comprising the AR-DO corresponding to the REF-DO contained into the received Get Data-Specific command. If more than one ARA has stored the requested rule defined by a specific REF-DO, then the ARA-M applet will perform conflict resolution processing and sends a Response-AR-DO message. A Get Data-Specific command is sent by the access control enforcer if and only if it has just received, from the ARA-M in response to a "GET DATA Refresh Tag", a refresh tag having a value different from the one stored. If the refresh tags are the same, there is no need for the access control enforcer to send the Get Data-Specific command comprising this specific REF-DO since it already has the copy of all the corresponding rule for the concerned secure element application.

It is recalled that the access control enforcer keeps value of a refresh tag that is associated to the rules previously retrieved from ARAs. So when a handset application tries to access a secure element application, before the access control enforcer sends a Get Data-Specific command, it sends a Get Data Refresh Tag to the ARA-M to check if the value is the same to the one it retrieved previously. In other words, a Refresh Tag originating from an ARA-M is updated into the access control enforcer everytime there is a change into the data it has retrieved.

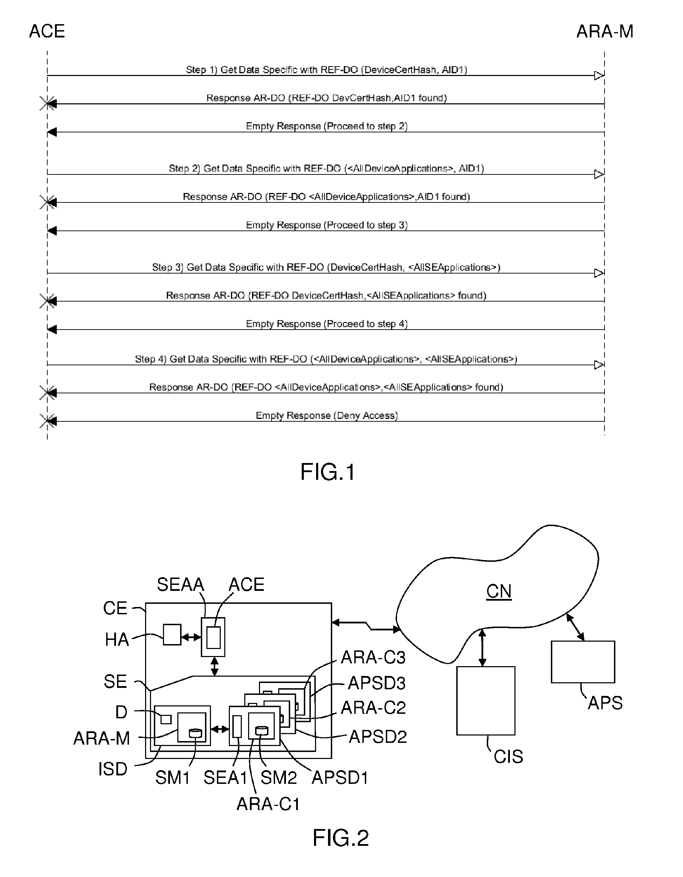

When a handset application tries to access a secure element application, the Get Data-Specific command may be sent repeatedly, if needed by the access control enforcer. As shown in figure 1, the first step consists in sending a REF-DO with specific "AID-REF-DO" and "HASH-REF-DO". If the ARA-M applet gives an empty response, the access control enforcer will proceed to the next step. In the second step, the access control enforcer sends a REF-DO to <AllDeviceApplications> (denoted as C100) for the specific HASH-REF-DO and the specific AID-REF-DO. If the ARA-M applet gives an empty response, the access control enforcer will proceed to the third step. In the third step, the access control enforcer sends a REF-DO to <AllSEApplications> (denoted as 4F00 - AllSEApplications has a length of zero, hence 4F and 00, in contrast to a specific AID-REF-DO, the length is 5-16) for the AID-REF-DO and the specific HASH-REF-DO (as in the first step, the HASH-REF-DO is specific, which means that the length of C1 should be 20, unlike in the second step when it denotes for ALLDevice applications, the length of C1 is zero). If the ARA-M applet gives an empty response, the access control enforcer will proceed to the next step. In the fourth step, the access control enforcer sends a REF-DO to <AllSEApplications>, <AllDeviceApplications> denoted as E1044F00C100. If the fourth step response is still empty, the access control enforcer will deny access to the secure element application. "AllDeviceApplications" or "AllSEApplications" is represented as one data object and does not interpret a conflict resolution to "all" the rules.

For each Get Data-Specific command sent, ARA-M manages the conflict resolution when several ARAs store the same requested specific REF-DO. It is also important to note that <AllDeviceApplications> and <AllSEApplications> are specific notations encoded as C100 and 4F00 respectively.

As mentioned above, from the technical specification of Global Platform Device Secure Element Access Control version 1.0, the response to a Get Data-Specific command comprises an AR-DO. So, each time the ARA-M applet receives a Get Data specific command, it has to perform a conflict resolution to its REF-DO which affects the performance and even complexity of the ARA-M applet. Furthermore, if the Get Data-Specific command standard is deprecated the biggest impact would be if the access control enforcer was sending a Get Data-All command, because many rules would have to be retrieved and multiple "Get Data Next" command would be needed. So, from the response to the Get Data All, the access control enforcer would have to implement its own conflict resolution processing each time a REF-DO is repeated in a rule.

### Summary of the invention

So, an objective of the invention is to improve the situation, and more precisely to lessen the command sending from the access control enforcer.

To this effect the invention provides notably a method, intended for allowing an access control enforcer of a user wireless communication equipment, comprising at least one handset application, to access to rules stored into an Access Rule Application Master applet and/or at least one Access Rule Application Client applet of a secure element in a Global Platform Device Secure Element environment. This method comprises:
- a step (i) during which the access control enforcer transmits, to the secure element, a specific command comprising one data object, named REF-DO, which represents a rule REF-AR-DO to be retrieved for an handset application requesting access to a secure element application of the secure element, and
- a step (ii) during which the Access Rule Application Master applet determines each REF-AR-DO represented by a received REF-DO in storing means it comprises and in each Access Rule Application Client applet, and then transmits each determined REF-AR-DO in a response message.

The method according to the invention may include additional characteristics considered separately or combined, and notably:
- in step (ii) when the Access Rule Application Master applet does not find a REF-AR-DO represented by a received REF-DO, it may search in its storing means and in each Access Rule Application Client applet for a REF-AR-DO associated to an AID-REF-DO representing the secure element application to be accessed and matching this received REF-DO and to a specific value of a HASH-REF-DO representing the handset application requesting the access and not matching this received REF-DO (AID-REF-DO matches but HASH REF-DO does not match), then if it finds such a REF-AR-DO, it may transmit a REF-AR-DO, matching with the received REF-DO but with an AR-DO set to never to deny access to the secure element application to the handset application requesting the access, to the access control enforcer;
   ➢ in step (ii) when the Access Rule Application Master applet does not find a REF-AR-DO associated to an AID-REF-DO representing the secure element application to be accessed and matching the received REF-DO and to a specific value of a HASH-REF-DO representing the handset application requesting the access and not matching this received REF-DO, it may search in its storing means and in each Access Rule Application Client applet for any REF-AR-DO associated to a HASH-REF-DO set to <AllDeviceApplications> and matching this AID-REF-DO associated to the received REF-DO, then if it finds such a REF-AR-DO it may transmit it to the access control enforcer;
      o in step (ii) when the Access Rule Application Master applet does not find a REF-AR-DO associated to a HASH-REF-DO set to <AllDeviceApplications> and matching the AID-REF-DO associated to the received REF-DO, it may search in its storing means and in each Access Rule Application Client applet for any REF-AR-DO associated to an AID-REF-DO set to <AllSEApplications> and matching this HASH-REF-DO associated to the received REF-DO, then if it finds such a REF-AR-DO it may transmit it to the access control enforcer;
         ■ in step (ii) when the Access Rule Application Master applet does not find a REF-AR-DO associated to an AID-REF-DO set to <AllSEApplications> and matching this HASH-REF-DO associated to the received REF-DO, it may search in its storing means and in each Access Rule Application Client applet for any REF-AR-DO associated to an AID-REF-DO set to <AllSEApplications> and not matching a specific HASH-REF-DO (associated to the received REF-DO), then if it finds such a REF-AR-DO it will transmit it to the access control enforcer with the AID-REF-DO set to <AllSEApplications>, the HASH-REF-DO associated to the received REF-DO, and an AR-DO set to never to deny access to the secure element application to the handset application requesting the access;
            • in step (ii) when the Access Rule Application Master applet does not find a REF-AR-DO associated to an AID-REF-DO set to <AllSEApplications> and not matching the specific HASH-REF-DO, it may search in its storing means and in each Access Rule Application Client for any REF-AR-DO associated to an AID-REF-DO set to <AllSEApplications> or <AllDeviceApplications>, then if it finds such a REF-AR-DO it may transmit it to the access control enforcer;
               ❖ in step (ii) when the Access Rule Application Master applet does not find a REF-AR-DO associated to an AID-REF-DO set to <AllSEApplications> or <AllDeviceApplications>, it may transmit an empty message response to the access control enforcer;
- in step (ii) when the Access Rule Application Master applet has determined several REF-AR-DOs corresponding to a received REF-DO into at least two Access Rule Application applets associated to priority numbers, it may transmit each determined REF-AR-DO originating from the Access Rule Application applet associated to the highest priority number amongst the different priority numbers of these Access Rule Application applets.

The invention also provides another method, intended for allowing an access control enforcer of a user wireless communication equipment, comprising at least one handset application, to access to rules stored into an Access Rule Application Master applet and/or at least one Access Rule Application Client applet of a secure element in a Global Platform Device Secure Element environment. This other method comprises:
- a step (i) during which the access control enforcer transmits, to the secure element, a specific command comprising one data object (for instance a REF-DO or an AID-REF-DO or else a HASH-REF-DO) to be retrieved for an handset application requesting access to a secure element application of the secure element, and
- a step (ii) during which the Access Rule Application Master applet transmits a response message with a Response-All-AR-DO format.

The invention also provides a device intended for providing rules, stored into an Access Rule Application Master applet and/or at least one Access Rule Application Client applet of a secure element in a Global Platform Device Secure Element environment, to an access control enforcer of a user wireless communication equipment comprising at least one handset application.

This device is arranged, when the access control enforcer has transmitted, to the secure element, a specific command, comprising one data object, named REF-DO, which represents a rule REF-AR-DO to be retrieved for a handset application requesting access to a secure element application of this secure element, for determining each REF-AR-DO represented by a received REF-DO in the Access Rule Application Master applet and in each Access Rule Application Client applet, and then for triggering transmission by the secure element to the access control enforcer of a response message comprising each determined REF-AR-DO.

Such a device may be comprised into a secure element.

### Brief description of the figures

Other features and advantages of the invention will become apparent on examining the detailed specifications hereafter and the appended drawings, wherein:
- figure 1 schematically illustrates an example of algorithm describing the steps triggered by the use of a Get Data-Specific command in a Global Platform Device Secure Element environment,
- figure 2 schematically and functionally illustrates an example of wireless communication equipment comprising a secure element with a device according to the invention and coupled to a communication network, and
- figure 3 schematically illustrates an example of algorithm describing steps triggered by the use of a Get Data-Priority rule command according to the invention, in a Global Platform Device Secure Element environment,
- figure 4 schematically illustrates an example of routine allowing an Access Rule Application Master applet to retrieve priority numbers associated to received REF-DO in ARA applets, and
- figure 5 schematically illustrates an example of algorithm describing steps triggered by the use of a Get Data-Priority-All-Devices command according to the invention, in a Global Platform Device Secure Element environment.

### Detailed description of the preferred embodiment

The appended drawings may serve not only to complete the invention, but also to contribute to its definition, if need be.

The invention aims, notably, at offering a method intended for allowing an access control enforcer ACE of a user wireless communication equipment CE, comprising at least one handset application HA, to access to rules stored into an Access Rule Application Master applet ARA-M and/or at least one Access Rule Application Client ARA-Ck of a secure element SE, in a Global Platform Device Secure Element environment.

In the following description it will be considered that the wireless communication equipment (or handset) CE is a mobile telephone (for instance a smart phone). But the invention is not limited to this type of wireless communication equipment. It concerns a lot of wireless communication equipments comprising at least one handset application intended for accessing to at least one secure element application of a secure element. So, a user wireless communication equipment CE may be also an electronic tablet, a laptop, or a game console.

Moreover, in the following description it will be considered that the secure element SE is a SIM (or UICC) card. But the invention is not limited to this type of secure element. Indeed it concerns also smart cards or chip cards or else integrated circuit cards, for instance.

In the example illustrated in figure 2 the user wireless communication equipment CE comprises a handset application HA, a secure element SE, and a secure element access application programming interface SEAA, comprising an access control enforcer ACE and coupled to the handset application HA and secure element SE.

According to the Global Platform Device Secure Element Access Control specification, the secure element SE (here a SIM card, as an example) comprises an Access Rule Application Master applet ARA-M and at least one Access Rule Application Client applet ARA-Ck.

The Access Rule Application Master applet ARA-M is part of an issuer Security Domain (or SD) ISD (in Global Platform Card Specifications, this Security Domain is owned by the issuer (MNO)). It comprises a first storing means SM1 arranged for storing data defining access control rules REF-AR-DOs. As mentioned in the introductory part, an access control rule is a mapping between a handset application HA (running into the wireless communication equipment CE and represented by a "HASH-REF-DO") and a secure element application SEAk (represented by an "AID-REF-DO"), and what kind of restricted access are defined.

Also as mentioned in the introductory part, each REF-AR-DO defining a rule is composed of a first small data object "REF-DO" (mapping a secure element application SEAk and a handset application HA) and a second small data object "AR-DO" (describing a (control access) rule, and which can be an "APDU-AR-DO" or a "NFC-AR-DO" or both).

The (control access) rules stored into the first storing means SM1 may be provided to the secure element SE by a server (or card issuer) ICS, possibly over the air.

Each Access Rule Application Client applet ARA-Ck is part of an application provider Security Domain (or SD) APSDk (in Global Platform Card Specifications, this Security Domain is owned by the Application Provider (for instance a bank)), which further comprises an associated secure element application SEAk. It comprises a second storing means SM2 arranged for storing data defining access control rules REF-AR-DOs. The (control access) rules stored into the second storing means SM2 may be provided to the secure element SE by an application provider server APS, possibly over the air.

In the non-limiting example illustrated in figure 2 the secure element SE comprises three application provider SDs APSD1 to APSD3 (k = 1 to 3). But it could comprise one or two application provider SDs, or more than three application provider SDs.

As mentioned before, the invention proposes a method intended for allowing the access control enforcer ACE to access to rules stored into the Access Rule Application Master applet ARA-M and the Access Rule Application Clients ARA-Ck of the secure element SE. This method comprises two main steps (i) and (ii).

A first main step (i) of this method is initiated each time a handset application HA of the user wireless communication equipment CE wants (or needs) to communicate with a secure element application SEAk of the secure element SE.

In this case the access control enforcer ACE transmits, to the secure element SE, a specific command comprising one data object REF-DO, which represents a rule REF-AR-DO to be retrieved for the handset application HA requesting access to the secure element application SEAk.

It is important to note that this specific command, for instance named "Get Data-Priority Rule", is a new Get Data command to be used by the access control enforcer ACE in the Global Platform Device Secure Element environment, and which is different from the other Get Data commands (Get Data-All and Get Data-Specific) known by the man skilled in the art.

In the second main step (ii) of the method the Access Rule Application Master applet ARA-M determines each REF-AR-DO represented by a received REF-DO in its first storing means SM1 and in each Access Rule Application Client applet ARA-Ck, and then transmits each determined REF-AR-DO in a response message which is similar to a "Response-ALL-AR-DO" message known by the man skilled in the art.

This second main step (ii) may be triggered and controlled by a device D that is comprised into the secure element SE, possibly into the issuer SD ISD that is coupled to the Access Rule Application Master applet ARA-M.

Such a device D is preferably made of software modules, at least partly. But it could be also made of a combination of hardware and software modules. In case where it is made of software modules it can be stored in a memory or in any computer software product.

This new specific command (Get Data-Priority Rule) allows the Access Control Enforcer ACE to send only one Get Data command to the Access Rule Application Master applet ARA-M to retrieve some chosen rules, and the device D to respond to this new specific command by means of a single response message containing many possible REF-AR-Dos.

Preferably, this new specific command (Get Data-Priority Rule) is sent to the device D after the Access Control Enforcer ACE has checked near the Access Rule Application Master applet ARA-M that the rules stored into the first SM1 and second SM2 storing means had not changed since the preceding check. Such a check is performed by means of a "Get Data Refresh Tag" command.

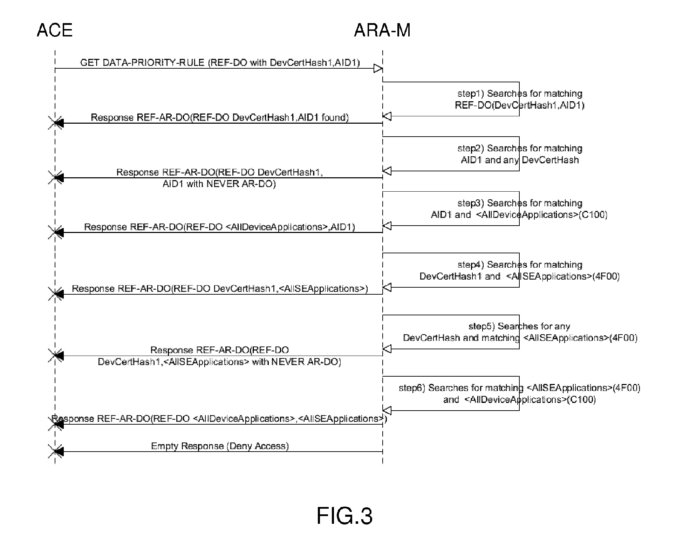

In the main step (ii) when the Access Rule Application Master applet ARA-M finds each REF-AR-DO represented by a received REF-DO, the device D sends a response message comprising each determined REF-AR-DO to the access control enforcer ACE, as illustrated by step 1 in figure 3.

But, if this determination failed (or is empty), the device D may proceed to the step 2 illustrated in figure 3.

In this step 2, which is a part of the second main step (ii), the device D triggers a search by the Access Rule Application Master applet ARA-M, in the first SM1 and second SM2 storing means, for each REF-AR-DO associated to an AID-REF-DO representing the secure element application SEAk to be accessed and matching a received REF-DO and to a specific value of a HASH-REF-DO representing the handset application HA requesting this access. Then, if it finds at least one REF-AR-DO, it transmits a REF-AR-DO, matching with a received REF-DO but with an AR-DO set to never to deny access to the secure element application SEAk to this handset application HA, to the device D which transmits it (them) to the access control enforcer ACE.

This allows to comply with the Global Platform Device Secure Element Access Control specification requesting that if a specific rule associates the HASH-REF-DO of a handset application HA with the AID-REF-DO of a secure element application SEAk, then access to all the other handset applications is denied unless a specific rule explicitly exists for this other handset application.

But, if this search failed (or is empty), the device D may proceed to the step 3 illustrated in figure 3.

In this step 3, which is a part of the second main step (ii), the device D triggers a search by the Access Rule Application Master applet ARA-M, in the first SM1 and second SM2 storing means, for any REF-AR-DO associated to a HASH-REF-DO set to <AllDeviceApplications> and matching this AID-REF-DO associated to a received REF-DO. For instance, the value of <AllDeviceApplications> is 4F00. Then, if it finds at least one REF-AR-DO, it transmits each found REF-AR-DO to the device D which transmits it (them) to the access control enforcer ACE.

But, if this search failed (or is empty), the device D may proceed to the step 4 illustrated in figure 3.

In this step 4, which is a part of the second main step (ii), the device D triggers a search by the Access Rule Application Master applet ARA-M, in the first SM1 and second SM2 storing means, for any REF-AR-DO associated to an AID-REF-DO set to <AllSEApplications> and matching the HASH-REF-DO associated to the received REF-DO. For instance, the value of <AllSEApplications> is 4F00. Then, if it finds at least one REF-AR-DO, it transmits each found REF-AR-DO to the device D which transmits it (them) to the access control enforcer ACE.

But, if this search failed (or is empty), the device D may proceed to the step 5 illustrated in figure 3.

In this step 5, which is a part of the second main step (ii), the device D triggers a search by the Access Rule Application Master applet ARA-M, in the first SM1 and second SM2 storing means, for any REF-AR-DO associated to an AID-REF-DO set to <AllSEApplications> and not matching a specific HASH-REF-DO. For instance, the value of <AllSEApplications> is 4F00 and the value of the specific HASH-REF-DO is different from C100. Then, if it finds at least one REF-AR-DO, it transmits a REF-AR-DO, with this AID-REF-DO set to 4F00, the HASH-REF-DO associated to the received REF-DO, and an AR-DO set to never to deny access to the secure element application SEAk, to the device D which transmits it (them) to the access control enforcer ACE.

But, if this search failed (or is empty), the device D may proceed to the step 6 illustrated in figure 3.

In this step 6, which a part of the second main step (ii), the device D triggers a search by the Access Rule Application Master applet ARA-M, in the first SM1 and second SM2 storing means, for any REF-AR-DO associated to an AID-REF-DO set to <AllSEApplications> or <AllDeviceApplications>. For instance, the value of <AllSEApplications> is 4F00 and the value of <AllDeviceApplications> is also C100. Then, if it finds at least one REF-AR-DO, it transmits each found REF-AR-DO to the device D which transmits it (them) to the access control enforcer ACE.

But, if this search failed (or is empty), the device D may transmit an empty message response to the access control enforcer ACE.

Preferably, when a REF-DO is associated with a specific AID-REF-DO (for instance different from 4F00) and an <AllDeviceApplication> equal to C100 (for instance), the device D may order the Access Rule Application Master applet ARA-M to directly start the determination (or search) at step 3.

Also preferably, when a REF-DO is associated with a specific HASH-REF-DO (for instance different from C100) and an <AllSEApplication> equal to 4F00 (for instance), the device D may order the Access Rule Application Master applet ARA-M to directly start the determination (or search) at step 4.

Also preferably, when a REF-DO is associated with an <AllSEApplication> equal to 4F00 (for instance) and an <AllDeviceApplication> equal to C100 (for instance), the device D may order the Access Rule Application Master applet ARA-M to directly start the determination (or search) at step 6.

Also preferably, when a REF-DO is associated with a Default Application (for instance C000) for an AID-REF-DO, the device D may treat this AID-REF-DO as a specific one and then may order the Access Rule Application Master applet ARA-M to start the determination (or search) at step 1.

Steps 1 to 6 described above may be associated with priority numbers during a determination. The lower the priority number, the higher the priority. In this case, the Access Rule Application Master applet ARA-M will have to send a specific priority command containing each received REF-DO to each Access Rule Application Client applet ARA-Ck to determine the priority number that is associated to each received REF-DO in its second storing means SM2. For instance, a priority number equal to 7 may be transmitted to the Access Rule Application Master applet ARA-M in response to the specific priority command when an Access Rule Application Client applet ARA-Ck does not store the REF-AR-DO that is represented by a received REF-DO. So, the Access Rule Application Master applet ARA-M will take into consideration the highest priority number received and will do the step (amongst step 1 to step 6) associated to it, to proceed to the determination (or search) in order to respond to the specific command sent by the Access Control Enforcer ACE.

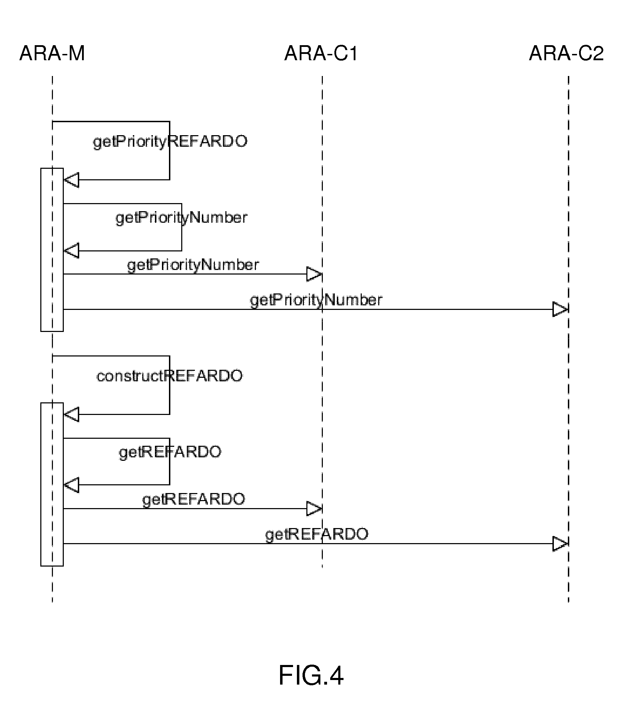

Figure 4 illustrates an example of routine allowing the Access Rule Application Master applet ARA-M (under control of the device D) to retrieve each priority number associated to each received REF-DO in itself and into each Access Rule Application Client applet ARA-Ck. The function "getPriorityREFARDO" is intended to encapsulate the management of calling "getPriorityNumber" and to determine what is the priority and which ARA to retrieve from for the "constructREFARDO". The function "getPriorityNumber" is intended for retrieving a priority number associated to a received REF-DO. This getPriorityNumber command is used to have an input parameter to indicate the last priority result of the previous Access Rule Application applet. This is to minimize processing time. If an Access Rule Application Client applet ARA-Ck is having a priority number that is greater than the last priority result, then its return may be 7. When the ARA-M gets all the priority numbers of the ARA-Ck, it will choose the least priority number and take into account which ARAs it will need to retrieve REF-AR-DO from to respond to the Access Control Enforcer ACE. The command "constructREFARDO" is intended to encapsulate the construction of the response and management of calling the "getREFARDO", and the command "getREFARDO" is intended to retrieve the REF-AR-DO stored from the Access Rule Application.

In the case where priority numbers are used, in step (ii), when the Access Rule Application Master applet ARA-M has determined several REF-AR-DOs corresponding to a received REF-DO into at least two Access Rule Application applets ARA-M and/or ARA-Ck associated to priority numbers, it transmits each determined REF-AR-DO, originating from the Access Rule Application applet ARA-M or ARA-Ck associated to the highest priority number amongst the different priority numbers of these Access Rule Application applets ARA-M and/or ARA-Ck, to the device D which transmits it (them) to the access control enforcer ACE.

If the least priority number is 2 or 5, then the ARA-M no longer needs to retrieve REF-AR-DO from ARA-Ck because it can construct the REF-AR-DO response on its own. Indeed, for priority 2, the response is always the matching received REF-DO and AR-DO set to never, and for priority 5, the response is always the <AllSEApplications> set to 4F00 and the matching HASH-REF-DO associated from received REF-DO and AR-DO set to never. In other words for priority numbers 2 and 5, only one REF-AR-DO response is needed.

As an example, if the priority number provided by the Access Rule Application Master applet ARA-M is 1, the priority number provided by the first Access Rule Application Client applet ARA-C1 is 6, and the priority number provided by the second Access Rule Application Client applet ARA-C2 is 7, then the device D will only return the REF-AR-DO provided by the Access Rule Application Master applet ARA-M to the access control enforcer ACE.

In another example, if the priority number provided by the Access Rule Application Master applet ARA-M is 3, the priority number provided by the first Access Rule Application Client applet ARA-C1 is 3, and the priority number provided by the second Access Rule Application Client applet ARA-C2 is 3, then the device D will return the three REF-AR-DOs provided by the Access Rule Application Master applet ARA-M and the first ARA-C1 and second ARA-C2 Access Rule Application Client applets to the access control enforcer ACE.

In another example, if the priority number provided by the Access Rule Application Master applet ARA-M is 4, the priority number provided by the first Access Rule Application Client applet ARA-C1 is 1, and the priority number provided by the second Access Rule Application Client applet ARA-C2 is 1, then the device D will return the two REF-AR-DOs provided by the first ARA-C1 and second ARA-C2 Access Rule Application Client applets to the access control enforcer ACE.

When the access control enforcer ACE retrieves the result for Get Data Priority Rule, the algorithm it uses for Get Data All may be reused and will yield the same conflict resolution than if it had used Get Data All. The main difference is that it will process lesser the data retrieved.

According to the Global Platform Device Secure Element Access Control specification, a handset application HA can be signed with a certificate within a chain. When searching for a rule for this handset application HA, the rule associated to a HASH-REF-DO is searched in the following order: EndEntityCertificate, IntermediateCertificate<1> ... IntermediateCertificate<n>, RootCertificate. So, if there is no rule stored with EndEntityCertificate but there is rule for IntermediateCertificate<1>, the applet will deny the rule as described in section 3.2.1 of the Global Platform Device Secure Element Access Control specification ("if a specific rule associates the hash of a device (or handset) application with the AID of an SE application, then access to all the other device (or handset) applications is denied unless a specific rule explicitly exists for this other device (or handset) application"). Therefore the Access Control Enforcer ACE will never have the opportunity to search for the IntermediateCertificate<1> because it is denied already.

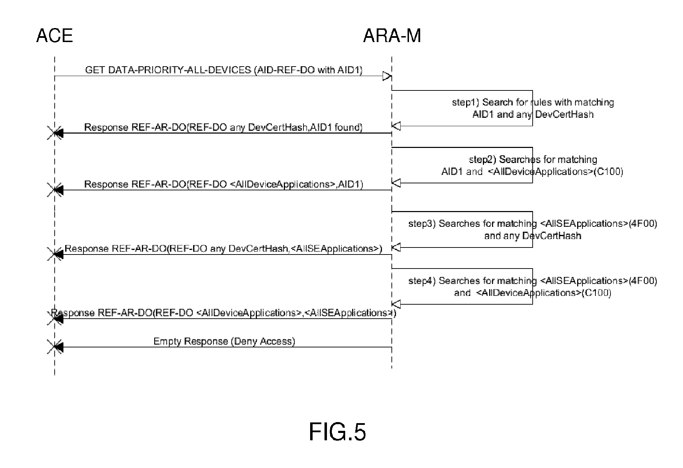

In order to overcome this drawback the invention proposes still another specific command (for instance named "Get Data-Priority-All-Devices") that is another variant of Get Data. An example of steps that can be implemented, in the case where Get Data-Priority-All-Devices command is used, is illustrated in figure 5. The difference between this last command and Get Data-Priority Rule is the fact that Get Data-Priority-All-Devices will comprise the AID-REF-DO only and without the HASH-REF-DO, in contrast to Get Data-Priority Rule which comprises the whole REF-DO. In figure 2 below step2, the applet will overwrite the REF-AR-DO to the matching HASH-REF-DO associated to the received REF-DO and set the AR-DO to never. So as mentioned above, the current Global Platform specification itself is ambiguous about querying chained certificates. So, the new command Get Data-Priority-All-Devices is intended for the handset manufacturer to implement chained certificate querying without sending a GET DATA All command. As can be seen from figure 5, the behaviour is almost the same as the one illustrated in figure 3, but step2 and step5 are omitted.

The invention also provides another method, intended for allowing an access control enforcer ACE of a user wireless communication equipment CE, comprising at least one handset application HA, to access to rules stored into an Access Rule Application Master applet ARA-M and/or at least one Access Rule Application Client applet ARA-Ck of a secure element SE in a Global Platform Device Secure Element environment. This other method comprises:
- a step (i) during which the access control enforcer ACE transmits, to the secure element SE, a specific command comprising one data object (for instance a REF-DO or an AID-REF-DO or else a HASH-REF-DO) to be retrieved for an handset application HA requesting access to a secure element application SEAk of the secure element SE, and
- a step (ii) during which the Access Rule Application Master applet ARA-M transmits a response message with a Response-All-AR-DO format.

The invention offers several advantages, and notably:
- it introduces simplicity on the handset side, but also on the ARA-M applet side because the only conflict resolution to be done is to overwrite the REF-AR-DO to the matching HASH-REF-DO associated to the received REF-DO and set the AR-DO to never,
- it improves performances. Indeed, secured elements such as smart card have limited resources and conflict resolution requires writing and passing data (APDU filter) around ARAs in the algorithm. So, the ARA-M applet has mainly to retrieve the rule from every ARA to provide it to the Access Control Enforcer. For the Access Control Enforcer side, instead of performing a Get Data-All command to retrieve all rules of all ARAs, the number of rules retrieved is significantly lesser than in the use case.

The invention is not limited to the embodiments of method and device described above, only as examples, but it encompasses all alternative embodiments which may be considered by one skilled in the art within the scope of the claims hereafter.

## Claims

1. Method for allowing an access control enforcer (ACE) of a user wireless communication equipment (CE), comprising at least one handset application (HA), to access to rules stored into an Access Rule Application Master applet (ARA-M) and/or at least one Access Rule Application Client applet (ARA-Ck) of a secure element (SE) in a Global Platform Device Secure Element environment, **characterized in that** it comprises a step (i) during which said access control enforcer (ACE) transmits, to said secure element (SE), a specific command comprising one data object, named REF-DO, which represents a rule REF-AR-DO to be retrieved for an handset application (HA) requesting access to a secure element application (SEAk) of said secure element (SE), and a step (ii) during which said Access Rule Application Master applet (ARA-M) determines each REF-AR-DO represented by a received REF-DO in storing means it comprises and in each Access Rule Application Client applet (ARA-Ck), and then transmits each determined REF-AR-DO in a response message.

2. Method according to claim 1, **characterized in that** in step (ii) when said Access Rule Application Master applet (ARA-M) does not find a REF-AR-DO represented by a received REF-DO, it searches in its storing means and in each Access Rule Application Client applet (ARA-Ck) for a REF-AR-DO associated to an AID-REF-DO representing said secure element application (SEAk) to be accessed and matching said received REF-DO and to a another specific value of a HASH-REF-DO representing the handset application (HA) requesting the access and not matching this received REF-DO, then if it finds such a REF-AR-DO, it transmits a REF-AR-DO, matching with the received REF-DO but with an AR-DO set to never to deny access to the secure element application (SEAk) to said handset application (HA) requesting said access, to said access control enforcer (ACE).

3. Method according to claim 2, **characterized in that** in step (ii) when said Access Rule Application Master applet (ARA-M) does not find a REF-AR-DO associated to an AID-REF-DO representing said secure element application (SEAk) to be accessed and matching said received REF-DO and to a specific value of a HASH-REF-DO representing said handset application (HA) requesting said access and not matching this received REF-DO, it searches in its storing means and in each Access Rule Application Client applet (ARA-Ck) for any REF-AR-DO associated to a HASH-REF-DO set to <AllDeviceApplications> and matching this AID-REF-DO associated to said received REF-DO, then if it finds such a REF-AR-DO it transmits it to said access control enforcer (ACE).

4. Method according to claim 3, **characterized in that** in step (ii) when said Access Rule Application Master applet (ARA-M) does not find a REF-AR-DO associated to a HASH-REF-DO set to <AllDeviceApplications> and matching said AID-REF-DO associated to said received REF-DO, it searches in its storing means and in each Access Rule Application Client applet (ARA-Ck) for any REF-AR-DO associated to an AID-REF-DO set to <AllSEApplications> and matching this HASH-REF-DO associated to said received REF-DO, then if it finds such a REF-AR-DO it transmits it to said access control enforcer (ACE).

5. Method according to claim 4, **characterized in that** in step (ii) when said Access Rule Application Master applet (ARA-M) does not find a REF-AR-DO associated to an AID-REF-DO set to <AllSEApplications> and matching this HASH-REF-DO associated to said received REF-DO, it searches in its storing means and in each Access Rule Application Client applet (ARA-Ck) for any REF-AR-DO associated to an AID-REF-DO set to <AllSEApplications> and not matching a specific HASH-REF-DO, then if it finds such a REF-AR-DO it transmits it to said access control enforcer (ACE) with this AID-REF-DO set to <AllSEApplications>, the HASH-REF-DO associated to the received REF-DO, and an AR-DO set to never to deny access to said secure element application (SEAk) to said handset application (HA) requesting said access.

6. Method according to claim 5, **characterized in that** in step (ii) when said Access Rule Application Master applet (ARA-M) does not find a REF-AR-DO associated to an AID-REF-DO set to <AllSEApplications> and not matching said specific HASH-REF-DO, it searches in its storing means and in each Access Rule Application Client applet (ARA-Ck) for any REF-AR-DO associated to an AID-REF-DO set to <AllSEApplications> or <AllDeviceApplications>, then if it finds such a REF-AR-DO it transmits it to said access control enforcer (ACE).

7. Method according to claim 6, **characterized in that** in step (ii) when said Access Rule Application Master applet (ARA-M) does not find a REF-AR-DO associated to an AID-REF-DO set to <AllSEApplications> or <AllDeviceApplications>, it transmits an empty message response to said access control enforcer (ACE).

8. Method according to one of claims 1 to 7, **characterized in that** in step (ii) when said Access Rule Application Master applet (ARA-M) has determined several REF-AR-DOs corresponding to a received REF-DO into at least two Access Rule Application applets (ARA-M, ARA-Ck) associated to priority numbers, it transmits each determined REF-AR-DO originating from the Access Rule Application applet (ARA-M, ARA-Ck) associated to the highest priority number amongst the different priority numbers of these Access Rule Application applets (ARA-M, ARA-Ck).

9. Method for allowing an access control enforcer (ACE) of a user wireless communication equipment (CE), comprising at least one handset application (HA), to access to rules stored into an Access Rule Application Master applet (ARA-M) and/or at least one Access Rule Application Client applet (ARA-Ck) of a secure element (SE) in a Global Platform Device Secure Element environment, **characterized in that** it comprises a step (i) during which said access control enforcer (ACE) transmits, to said secure element (SE), a specific command comprising one data object to be retrieved for an handset application (HA) requesting access to a secure element application (SEAk) of said secure element (SE), and a step (ii) during which said Access Rule Application Master applet (ARA-M) transmits a response message with a Response-All-AR-DO format.

10. Device (D) for providing rules, stored into an Access Rule Application Master applet (ARA-M) and/or at least one Access Rule Application Client applet (ARA-Ck) of a secure element (SE) in a Global Platform Device Secure Element environment, to an access control enforcer (ACE) of a user wireless communication equipment (CE) comprising at least one handset application (HA), **characterized in that** it is arranged, when said access control enforcer (ACE) has transmitted, to said secure element (SE), a specific command, comprising one data object, named REF-DO, which represents a rule REF-AR-DO to be retrieved for an handset application (HA) requesting access to a secure element application (SEAk) of said secure element (SE), for determining each REF-AR-DO represented by a received REF-DO in said Access Rule Application Master applet (ARA-M) and in each Access Rule Application Client applet (ARA-Ck), and then for triggering transmission by said secure element (SE) to said access control enforcer (ACE) of a response message comprising each determined REF-AR-DO.
